# EUROPÄISCHE PATENTSCHRIFT

(11) **EP 2 048 602 B1**
(45) Veröffentlichungstag und Bekanntmachung des Hinweises auf die Patenterteilung: **12.09.2012**
(21) Anmeldenummer: 08017686.0
(22) Anmeldetag: 09.10.2008
(51) Int. Cl.: G06K 19/077, G06K 19/04, H01Q 1/22

(54) **Raumgebilde mit einem RFID Transponder**
Spatial shape with an RFID transponder
Structure d'espace dotée d'un transpondeur RFID

(30) Priorität: 10.10.2007 DE 102007048798
(43) Veröffentlichungstag der Anmeldung: 15.04.2009
(73) Patentinhaber: SES RFID Solutions GmbH, 40489 Düsseldorf (DE)
(72) Erfinder: Scattergood, Martin, 40489 Düsseldorf (DE)
(74) Vertreter: Sparing Röhl Henseler

(56) Entgegenhaltungen:
- EP-A1- 1 203 542

## Beschreibung

Die Erfindung betrifft ein Raumgebilde mit einem RFID-Transponder nach dem Oberbegriff des Anspruchs 1.

Ein RFID-Transponder mit einem Chip und einer Spule als Antenne ermöglicht einen kontaktlosen Zugriff auf einen den Chip enthaltenden Speicher. In Karten angeordnete Transponder werden beispielsweise im Zusammenhang mit automatisierten Zutrittskontrollen, als Tickets, im Zusammenhang mit sicherheitsrelevanten Informationen als Pässe und Banking Cards, und im Zusammenhang mit der Herkunftskennzeichnung als Smart Labels und Etiketten verwendet.

Aus der DE 103 09 800 B3 ist eine Baugruppe für eine RFID-Transponderkarte und eine RFID-Transponderkarte bekannt, bei der ein Träger zum Aufwickeln eines Metalldrahts für die Spule des RFID-Transponders verwendet wird. Die beiden Enden der Spule sind mit einem Chip verbunden.

Mit der aus der DE 103 09 800 B3 bekannten RFID-Transponderkarte soll eine einen RFID-Transponder enthaltende Karte vereinfacht hergestellt werden und eine glatte Kartenoberfläche erzielt werden.

Es gilt als vorteilhaft, Raumgebilde mit RFID-Transpondern zu verwenden, die einfach maschinell gehandhabt und bearbeitet werden können. Die Handhabung und Bearbeitung betrifft das Auslesen und Beschreiben der Daten des RFID-Transponders.

Eine Möglichkeit der einfachen Handhabung besteht in der Verwendung von münzartigen Raumgebilden mit RFID-Transpondern, die unter anderem geeignete Rolleigenschaften aufweisen. Münzartige Raumgebilde können über entsprechende Schächte und Verteilersysteme einer Lese- und/oder Schreibstation zugeführt werden.

Aus DE 10 2006 025 000 A1 ist eine Münze mit einem RFID-System bekannt, die aus Edelmetall besteht und eine hohe Masse und entsprechende Massenverteilung aufweist. Die Verwendung von Metall ist jedoch nachteilig, da sie den Energietransfer zwischen einem RFID-Transponder und einer Lese- und/oder Schreibstation beeinflusst.

Aufgabe der Erfindung ist es daher, ein Raumgebilde nach dem Oberbegriff des Anspruchs 1 zu schaffen, bei dem ein Raumgebilde mit einem RFID-Transponder bei hoher Qualität der Datenübertragung mit einer geringen Ausschussrate bei der Herstellung erzeugbar ist, der die gewünschte Masse und Massenverteilung aufweist.

Diese Aufgabe wird durch die Merkmale des Anspruchs 1 gelöst.

Hierdurch wird ein Raumgebilde mit einem RFID-Transponder geschaffen, das eine Spule für den RFID-Transponder aus in mehreren benachbarten Windungen gewickeltem Metalldraht, einen daran angeschlossenen Chip für den RFID-Transponder und einen Träger, um dessen Rand die Spule gewickelt ist, aufweist. Das Raumgebilde ist münzartig ausgestaltet, und in dem Raumgebilde ist der Träger als kreisförmiges Abstandselement vorgesehen. Durch den Durchmesser des starren Abstandselements ist eine vorbestimmte Resonanz-Frequenz einstellbar, die aufgrund des stabilen Abstandselements, das nicht einfach verformbar ist, bei weiteren Herstellungsschritten des Raumgebildes nicht verändert wird. Die Spule und damit die Antenne des RFID-Transponders erfährt keine Änderung. In dem Abstandselement ist eine Aufnahme für den Chip ausgebildet, in dem dieser befestigt ist und die zum Schutz des Chips in einem Spritzgießverfahren dient; zudem kann eine Qualitätskontrolle des RFID-Transponders durch die feste Anordnung der RFID-Komponenten am Abstandselement erfolgen. Vor dem Spritzgießen ist eine Funktionsprüfung möglich. Das Abstandselement ist zur Bildung des Raumgebildes in einem schalenartig geformten Formteil aufgenommen. Die den Chip mit der Aufnahme aufweisende Seite des Abstandselements ist zum Formteil gerichtet. Das Formteil weist seinerseits mindestens ein Distanzelement auf, das sich in die Aufnahme des Abstandselements erstreckt, wobei mit dem mindestens einen Distanzelement eine Beabstandung der Aufnahme zu der der Aufnahme gegenüberliegenden Fläche des Formteils erreicht wird, und ein Raum für den Chip zwischen dem Abstandselement und dem Formteil geschaffen wird. Zur Manipulationssicherung und einer verbesserten Massenverteilung wird auf die Rückseite, d.h. die der Aufnahme gegenüberliegende Fläche des Abstandselements Material mittels Spritzgießverfahren aufgebracht und das Abstandselement mit dem Formteil dauerhaft verbunden, damit ist ein Hochsicherheits-RFID-Transponder ausbildbar. Durch das Abstandselement wird der Chip beim Spritzgießen geschützt, und es ist eine hohe Ausbeute der Raumgebilde mit Transponder erzielbar, weil unter anderem der Chip die beim Spritzgießen notwendige Temperatur bei der Herstellung des Raumgebildes nicht erfährt. Zudem ist durch die Aufnahme des Abstandselements in dem Formteil die Antenne stabil am Rand des Abstandselements gelagert und verformt sich beim Spritzgießen nicht, wodurch die eingestellte Resonanzfrequenz erhalten bleibt.

Vorzugsweise sind die Distanzelemente so angeordnet und ausgestaltet, dass ihre Masse und ihre Masseverteilung eine mittige Schwerpunktlage des gesamten Raumgebildes ergibt, wodurch die Rolleigenschaften der Münze verbessert sind.

Bevorzugt ist die Aufnahme in dem Abstandselement durch eine randseitig offene Vertiefung in dem Abstandselement gebildet. Dadurch ist eine einfache Ausgestaltung erreichbar, mit der Chips unterschiedlicher äußerer Gestaltungen, wie Höhe, Breite und dergleichen, verwendet werden können.

Zur Erzielung einer besonders hohen Masse ist bevorzugt, dass das Material zum Überspritzen, das Material des Formteils und/oder das Material des Abstandselements ein Plastik hoher Dichte aufweist. Durch die Ausgestaltung des Abstandselements mit einem Schutz des Chips sind die erforderlichen Spritzgießtemperaturen erreichbar, ohne dass der Chip einer zu hohen Temperatur ausgesetzt und geschädigt wird, da die Rückseite der Aufnahme als "Ablenkfläche" für das Spritzgießmaterial bezüglich des Chips wirkt. Es ist ein münzartiges Raumgebilde mit einer hohen Masse möglich, wobei die Übertragungseigenschaften nicht durch die Anwesenheit von Metallen verschlechtert werden. Der Energietransfer zwischen dem Lesegerät für den RFID-Transponder und dem RFID-Transponder wird nicht beeinflusst. Es werden PPS (Polypropylensulfid), PP (Polypropylen), PA (Polyamid), ABS (Acrylnitril-Butatien-Styrol), PBT (Polybutylenterephthalat), TPU (Thermoplastisches Polyurethan), PEEK (Polyetheretherketon) oder TES (styrolbasiertes thermoplastisches Elastomer) bevorzugt.

Bevorzugt weist das Formteil einen Rand mit innenseitigen Aussparungen auf der Seite des mindestens einen Distanzelements auf, so dass das überspritzte Material beim Überspritzen in die Aussparungen gelangt und eine feste Verbindung erreicht wird.

Als Übertragungsfrequenz für den RFID-Transponder sind Frequenzen von 125 kHz, 134,2 kHz, 6,8 MHz und 13,56 MHz möglich. Bei einer Übertragung der Daten bei einer Frequenz von 13,56 MHz oder bei höherer Frequenz weist die Spule des RFID-Transponders ein geringes Eigengewicht auf, so dass das Raumgebilde für diese Frequenz besonders bevorzugt ist, jedoch nicht darauf beschränkt ist. Durch die entsprechende Gestaltung des Raumgebildes ist ein gutes Verhalten hinsichtlich der maschinellen Handhabung erzielbar.

Weitere Ausgestaltungen der Erfindung sind den Unteransprüchen und der nachfolgenden Beschreibung zu entnehmen.

Die Erfindung wird nachstehend anhand des in den beigefügten Abbildungen dargestellten Ausführungsbeispiels näher erläutert.
Fig. 1 a zeigt ein Abstandselement eines Raumgebildes in einer perspektivischen Ansicht;
Fig. 1b zeigt das Abstandselement von Fig. 1a in einer Schnittansicht;
Fig. 2a zeigt ein schalenartig geformtes Formteil in einer perspektivischen Ansicht;
Fig. 2b zeigt das Formteil von Fig. 2a in einer Seitenansicht;
Fig. 3a zeigt ein Oberteil in einer perspektivischen Ansicht;
Fig. 3b zeigt das Oberteil von Fig. 3a in einer Schnittansicht;
Fig. 4a zeigt das Raumgebilde in perspektivischer Ansicht;
Fig. 4b zeigt das Raumgebilde von Fig. 4a in einer Seitenansicht.

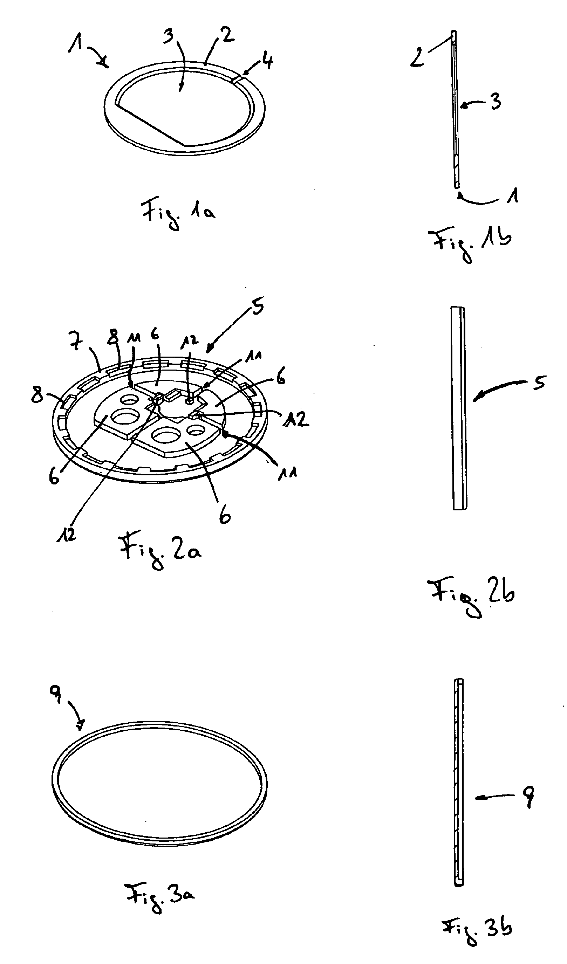

Fig. 1 a und 1b zeigen eine Ausführungsform eines Abstandselements 1, das zur Bildung eines erfindungsgemäßen Raumgebildes 10 mit einem RFID-Transponder verwendet wird. Das Abstandselement 1 ist kreisförmig aus einem stabilen und wenig verformbaren starren Material, wie beispielsweise PPS (Polypropylensulfid), ausgebildet. Um den umfangsseitigen Rand 2 des Abstandselements 1 ist eine Spule für den RFID-Transponder wickelbar. Das Abstandselement 1 weist einen Durchmesser von etwa 22,5 mm sowie eine Dicke von etwa 0,58 mm auf und ist für eine Übertragungsfrequenz des RFID-Transponders von 13,56 MHz geeignet.

Es ist eine großflächige Aufnahme 3 in Form einer Ausnehmung bzw. Vertiefung im Abstandselement 1 vorgesehen, die randseitig offen ist durch einen Kanal 4. Durch den Kanal 4 sind die Enden der Spule des RFID-Transponders vom Umfang her in die Aufnahme 3 führbar. In der Aufnahme 3 ist ein Chipmodul, d.h. ein auf einer Platine aus FR4 (einem Standardmaterial hierfür) befindlicher Chip, des RFID-Transponders angebracht bzw. befestigt, an dem die Enden der Spule angeschlossen werden. Die Aufnahme 3 weist einen kreisförmigen inneren Umfang mit einem Radius von ungefähr 9,25 mm auf; der Außenumfang des Abstandselements 1 weist einen Radius von etwa 11,25 mm auf.

Fig. 2a und 2b zeigen ein schalenartiges Formteil 5, dessen äußere Fläche einen Teil der äußeren Oberfläche des münzartigen Raumgebildes 10 bildet. Das Formteil 5 weist einen erhöhten Rand 7 am Außenumfang auf. Der Innendurchmesser des Rands 7 ist geringfügig größer oder etwa gleich groß wie der Außendurchmesser des Abstandselements 1 mit aufgewickelter Spule, so dass das Formteil 5 das Abstandselement mit am Rand 2 aufgewickelter Spule aufnehmen kann. Die um den Rand 2 des Abstandselements 1 gewickelte Spule wird in dem Formteil 5 unterstützt. Durch die Aufnahme im Formteil 5 liegt die Spule an der Innenseite des Formteils 5 an, die Spule kann gegenüber dem Rand 2 des Abstandselements 1 auch bei einem anschließenden Spritzgießen nicht verrutschen.

Der an dem Abstandselement 1 angebrachte Chip zeigt dabei in Richtung des Formteils 5. In dem Bereich zum Aufnehmen des Abstandselements 1 ist mindestens ein Distanzelement 6 ausgebildet, das an die Kontur der Aufnahme 3 angepasst ist. In der dargestellten Ausführungsform wird der Rand 2 der Aufnahme 3 durch den äußeren Umfang der Distanzelemente 6 nachgebildet, wobei sich die Distanzelemente 6 in die Aufnahme 3 erstrecken. Zwischen den Distanzelementen 6 und der Unterseite des Formteils 5 und der Fläche der Aufnahme 3 ist ein Raum, in dem sich der Chip des RFID-Transponders befindet.

Die Distanzelemente 6 der dargestellten Ausführungsform sind an den Innenumfang der Aufnahme 3 im wesentlich formschlüssig angepasst, indem sie mit einem Teil ihres äußeren Umfangs den inneren Umfang der Aufnahme 3 nachbilden. Zudem sind die Distanzelemente 6 so angeordnet, dass sich ein Schwerpunkt des Raumgebildes 10 ergibt, der im Wesentlichen in der Mitte des Raumgebildes 10 bezogen auf den Umfang liegt.

Der Chip wird durch das mindestens eine Distanzelement 6 und das Abstandselement 1 umgeben und ist bei einem nachfolgenden Spritzgießen, bei dem das im Formteil 5 aufgenommene bzw. angeordnete Abstandselement 1 überspritzt wird, geschützt. In durch die Distanzelemente 6 gebildeten Durchgängen 11 sind endseitig in der Nähe des Chips Schutzelemente 12 vorgesehen, die einen direkten Kontakt mit einem durch die Durchgänge 11 fließenden Spritzgießmaterial verhindern. Zudem können die Schutzelemente 12 für einen formschlüssigen Kontakt, d.h. Einpassung oder Einschnappen, mit dem Chipmodul ausgestaltet sein. Es wird ein zusätzlicher Schutz dadurch erreicht, dass die Platine des Chipmoduls an den Schutzelementen 12 des Formteils 5 einrastet bzw. einschnappt.

Zur Erhöhung der Kontaktfläche mit dem überspritzten Material weist der Rand 7 des Formteils 5 am Innenumfang Ausnehmungen 8 auf, die um den Umfang des Rands 7 verteilt angeordnet sind. Die Ausnehmungen 8 überstreichen jeweils einen Winkelbereich von etwa 15 °, wobei zwischen benachbarten Ausnehmungen 8 ein Abstand von etwa 7,5 ° vorliegt.

Das Formteil 5 hat einen Außenumfang von ungefähr 30 mm. Das Material des dargestellten Formteils 5 weist PPS auf.

Als Material für das Spritzgießen, bei dem das im Formteil 5 liegende Abstandselement 1 sowie die freiliegenden Bereiche des Formteils 5 überspritzt werden, wird ein sogenanntes High Gravity Compound verwendet, das eines der Materialien, PPS (Polypropylensulfid), PP (Polypropylen), PA (Polyamid), ABS (Acrylnitril-Butatien-Styrol), PBT (Polybutylenterephthalat), TPU (thermoplastisches Polyurethan), PEEK (Polyetheretherketon) oder TES (styrolbasiertes thermoplastisches Elastomer), aufweisen kann.

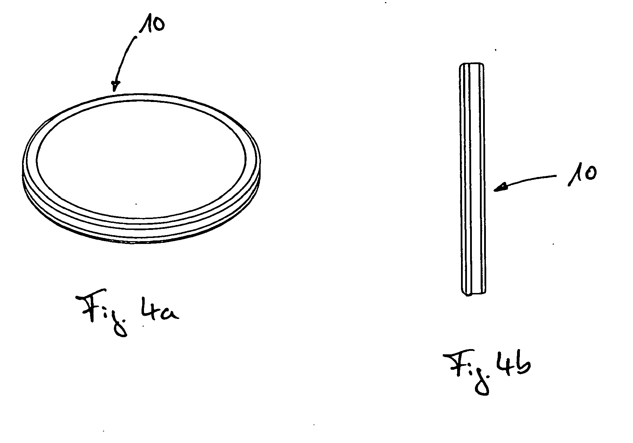

In Fig. 3a und 3b ist ein Oberteil 9 für das erfindungsgemäße Raumgebilde gezeigt. Das Oberteil 9 weist den gleichen Außenumfang von etwa 30 mm auf und kann über den überspritzten Bereich gestülpt werden, so dass sich das in Fig. 3a, 4b und 4c gezeigte Raumgebilde ergibt. Das Oberteil 9 weist PPS auf. Alternativ kann das Oberteil 9 beim Überspritzen des Abstandselements 1 und des Formteils 5 durch eine entsprechende Form ausgebildet werden.

### Bezugszeichenliste

- 1: Abstandselement
- 2: Rand (der Aufnahme)
- 3: Aufnahme
- 4: Kanal
- 5: Formteil
- 6: Distanzelement
- 7: Rand (des Formteils)
- 8: Ausnehmung
- 9: Oberteil
- 10: Raumgebilde
- 11: Durchgang
- 12: Schutzelement

## Patentansprüche

1. Raumgebilde (10) mit einem RFID-Transponder, das eine Spule für den RFID-Transponder aus in mehreren benachbarten Windungen gewickeltem Metalldraht, einen daran angeschlossenen Chip für den RFID-Transponder und einen Träger, um dessen Rand die Spule gewickelt ist, aufweist, **dadurch gekennzeichnet, dass** der Träger als in dem als münzartig ausgebildeten Raumgebilde angeordnetes starres kreisförmiges Abstandselement (1) vorgesehen ist, in dem eine Aufnahme (3) zum Schutz für den Chip ausgestaltet ist, und dass das Raumgebilde ein schatenartig geformtes Formteil (5) aufweist, das das Abstandselement (1) aufnimmt für eine Unterstützung der Spule am Rand (2) des Abstandselements (1) an der Innenseite des Formteils (5), und dass mindestens ein Distanzelement (6) an der Innenseite des Formteils (5) befestigt ist und in die Aufnahme (3) des Abstandselements (1) hineinragt, wobei das Abstandselement (1) in dem Formteil (5) überspritzt ist, indem auf die der Aufnahme (3) abgewandten Seite Material mittels Spritzgießverfahren aufgebracht ist.

2. Raumgebilde (10) nach Anspruch 1, **dadurch gekennzeichnet, dass** das mindestens eine Distanzelement (6) für eine mittige Schwerpunktlage bezüglich des Umfangs des Raumgebildes (10) ausgestaltet und angeordnet ist.

3. Raumgebilde (10) nach Anspruch 1 oder 2, **dadurch gekennzeichnet, dass** die Aufnahme (3) durch eine randseitig offene Vertiefung im Abstandselement (1) gebildet ist.

4. Raumgebilde (10) nach einem der Ansprüche 1 bis 3, **dadurch gekennzeichnet, dass** das Material zum Überspritzen, das Material des Formteils (5) und/oder das Material des Abstandselements (1) ein Plastik hoher Dichte aufweist.

5. Raumgebilde (10) nach Anspruch 4, **dadurch gekennzeichnet, dass** das Plastik PPS, PP, PA, ABS, PBT, TPU, PEEK oder TES aufweist.

6. Raumgebilde (10) nach einem der Ansprüche 1 bis 5, **dadurch gekennzeichnet, dass** das Formteil (5) auf der Seite des mindestens einen Distanzelements (6) einen Innenrand mit Ausnehmungen (8) aufweist.

7. Raumgebilde (10) nach einem der Ansprüche 1 bis 6, **dadurch gekennzeichnet, dass** die Spule für eine Übertragung von Daten bei ungefähr 13,56 MHz oder höherer Frequenz ausgestaltet ist.

## Claims

1. Three-dimensional structure (10) having an RFID transponder, which three-dimensional structure has a coil for the RFID transponder comprising metal wire which is wound in a plurality of adjacent turns, a chip, connected to said coil, for the RFID transponder and a support, the edge of which has the coil wound around it, **characterized in that** the support is provided as a rigid circular spacer element (1) which is arranged in the three-dimensional structure, which is in the form of a coin, and which contains a holder (3) for protection for the chip, and **in that** the three-dimensional structure has a moulded portion (5) which is shaped in the manner of a shell and which holds the spacer element (1) for the purpose of supporting the coil at the edge (2) of the spacer element (1) on the inside of the shaped portion (5), and **in that** at least one distance element (6) is mounted on the inside of the shaped portion (5) and projects into the holder (3) in the spacer element (1), wherein the spacer element (1) is oversprayed in the shaped portion (5) by virtue of material being applied to the side which is remote from the holder (3) by means of an injection-moulding method.

2. Three-dimensional structure (10) according to Claim 1, **characterized in that** the at least one distance element (6) is designed and arranged for a central centre of gravity in relation to the perimeter of the three-dimensional structure (10).

3. Three-dimensional structure (10) according to Claim 1 or 2, **characterized in that** the holder (3) is formed by a depression that is open at the edge in the spacer element (1).

4. Three-dimensional structure (10) according to one of Claims 1 to 3, **characterized in that** the material for overspraying, the material of the moulded portion (5) and/or the material of the spacer element (1) has a high-density plastic.

5. Three-dimensional structure (10) according to Claim 4, **characterized in that** the plastic has PPS, PP, PA, ABS, PBT, TPU, PEEK or TES.

6. Three-dimensional structure (10) according to one of Claims 1 to 5, **characterized in that** the shaped portion (5) has an inner edge with recesses (8) on the side of the at least one distance element (6).

7. Three-dimensional structure (10) according to one of Claims 1 to 6, **characterized in that** the coil is designed for transmitting data at approximately 13.56 MHz or a higher frequency.

## Revendications

1. Produit tridimensionnel (10) présentant
un transpondeur RFID et doté d'une bobine prévue pour le transpondeur RFID, formée d'un fil métallique enroulé en plusieurs enroulements voisins et à laquelle est raccordée une puce prévue pour le transpondeur RFID,
et un support autour de la périphérie duquel la bobine est enroulée,
**caractérisé en ce que**
le support est prévu comme élément d'écartement (1) de forme circulaire, rigide, disposé dans le produit tridimensionnel configuré en forme de pièce de monnaie et dans lequel un logement (3) est formé pour protéger la puce, et
**en ce que** le produit tridimensionnel présente une pièce moulée (5) en forme de coquille qui reçoit l'élément d'écartement (1) en vue de maintenir la bobine en place sur le bord (2) de l'élément d'écartement (1) contre le côté intérieur de la pièce moulée (5) et
**en ce qu'**au moins un élément d'espacement (6) est fixé sur le côté intérieur de la pièce moulée (5) et fait saillie dans le logement (3) de l'élément d'écartement (1),
l'élément d'écartement (1) étant injecté dans la pièce moulée (5) en appliquant par une opération de moulage par injection un matériau sur le côté non tourné vers le logement (3).

2. Produit tridimensionnel (10) selon la revendication 1, **caractérisé en ce que** le ou les éléments d'espacement (6) sont configurés et disposés de telle sorte que le centre de gravité soit situé au milieu par rapport à la périphérie du produit tridimensionnel (10).

3. Produit tridimensionnel (10) selon les revendications 1 ou 2, **caractérisé en ce que** le logement (3) est formé dans l'élément d'écartement (1) sous la forme d'un évidement à bord ouvert.

4. Produit tridimensionnel (10) selon l'une des revendications 1 à 3, **caractérisé en ce que** le matériau d'injection, le matériau de la pièce moulée (5) et/ou le matériau de l'élément d'écartement (1) comporte une matière plastique de haute densité.

5. Produit tridimensionnel (10) selon la revendication 4, **caractérisé en ce que** la matière plastique comporte du PPS, du PP, du PA, de l'ABS, du PBT, du TPU, du PEEK ou du TES.

6. Produit tridimensionnel (10) selon l'une des revendications 1 à 5, **caractérisé en ce que** la pièce moulée (5) comporte un bord intérieur présentant des découpes (8) du côté du ou des éléments d'espacement (6).

7. Produit tridimensionnel (10) selon l'une des revendications 1 à 6, **caractérisé en ce que** la bobine est configurée pour transférer des données à une fréquence d'environ 13,56 MHz ou à une fréquence plus élevée.
